# EUROPÄISCHE PATENTSCHRIFT

(11) **EP 1 673 028 B1**
(45) Veröffentlichungstag und Bekanntmachung des Hinweises auf die Patenterteilung: **06.10.2010**
(21) Anmeldenummer: 04763260.9
(22) Anmeldetag: 16.07.2004
(51) Int. Cl.: A61C 9/00, A63B 71/08

(54) **VERFAHREN UND ABDRUCKLÖFFEL ZUR HERSTELLUNG EINER DENTALSCHIENE**
METHOD AND IMPRESSION TRAY FOR PRODUCING A DENTAL MOLD
PROCEDE ET PORTE-EMPREINTE POUR LA FABRICATION D'UNE GOUTTIERE DENTAIRE

(30) Priorität: 17.10.2003 DE 10349047
(43) Veröffentlichungstag der Anmeldung: 28.06.2006
(73) Patentinhaber: Kettenbach GmbH & CO. KG, 35713 Eschenburg (DE)
(72) Erfinder: SUCHAN, Matthias, 57627 Hachenburg (DE); BUBLEWITZ, Alexander, 35745 Herborn (DE)
(74) Vertreter: KEIL & SCHAAFHAUSEN Patentanwälte
(86) Internationale Anmeldenummer: PCT/EP2004/007903
(87) Internationale Veröffentlichungsnummer: WO 2005/046503

(56) Entgegenhaltungen:
- EP-A- 0 516 711
- US-A- 5 031 638
- US-A- 5 076 791
- US-A1- 2002 144 694

## Beschreibung

Die Erfindung betrifft ein Verfahren zur Herstellung einer Dentalschiene sowie einen Abdrucklöffel hierfür, welcher aus einem bei Temperaturen unter 140° C festen Material besteht und der mit einem zumindest bei Temperaturen zwischen 20° C und 80° C, vorzugsweise zwischen 30° C und 60° C plastisch verformbaren Material beschickt ist.

US 2002/0144694 offenbart ein Verfahren zur Herstellung einer Dentalschiene.

Zur Behandlung von Zähnen und Zahnfleisch ist es bspw. aus der US 5,639,445 und der US 5,326,685 bekannt, Wirkstoffe mittels eines schaum- oder schwammartigen Trägermaterials oder mittels eines plastisch vorformbaren Trägermaterials zu applizieren, welches an einen Zahn oder das Zahnfleisch anlegbar ist. Weiter wird in der US 5,639,445 ein Verfahren zur Behandlung von Zähnen oder Zahnfleisch beschrieben, nach welchem zunächst ein plastisch verformbares Material manuell an Zähnen oder Zahnfleisch angedrückt wird, um eine Abformung zu erhalten. Nach dem Auftragen von einem oder mehreren Wirkstoffen kann diese Abformung dann zur Behandlung der Zähne oder des Zahnfleischs wieder in den Patientenmund appliziert werden.

Dentalschienen werden bisher aus einem thermoplastischen Folienmaterial hergestellt, welches über einer Flamme oder bspw. einer Heizschlange erwärmt und auf ein vorher erstelltes Gipsmodell aufgelegt wird. Die im erwärmten Zustand plastisch verformbare Folie kann bspw. mittels eines Knetmaterials auf dem Modell adaptiert werden, um so möglichst gleichmäßig an dem Zahnmodell anzuliegen. Durch die Erwärmung über der Flamme wird die Folie jedoch unterschiedlich stark plastifiziert, was zu einer ungleichmäßigen Schichtdecke der Folie und/oder zu einer mangelhaften Adaption führen kann. Da die Folie über der Flamme hoch erhitzt wird, darf sie zur Adaption nicht direkt mit Zähnen in Kontakt kommen, da diese sonst geschädigt werden könnten. Es ist daher erforderlich, zunächst ein Gipsmodell herzustellen, was zeit- und kostenintensiv ist. Eine gemeinsame Erwärmung der Folie mit dem Knetmaterial ist nicht möglich, da das Knetmaterial üblicherweise nicht für die bei der Erwärmung mittels einer Flamme entstehenden hohen Temperaturen geeignet ist.

Weiter ist bspw. aus der US 5,076,791 ein Verfahren zur Herstellung einer Bleichschiene bekannt, bei welchem ein bspw. im Sport eingesetzter Mundschutz aus einem thermoplastischen Material oder ein anderer geeigneter Träger in heißem Wasser erweicht wird. Dieser Mundschutz kann in dem plastisch verformbaren Zustand mit den Fingern direkt auf den Zähnen im Mund adaptiert werden. Durch den ungleichmäßigen Druck, der auf das Schienenmaterial mit den Fingern ausgeübt wird, ist eine gleichmäßige Schichtdicke und Konturenpassung der Schiene jedoch nicht zu erreichen. Derartige Bleichschienen werden bspw. unter den Bezeichnungen 'Rapid White' (Natural White GmbH) und 'EZNow Tray' (Ultradent Products, Inc.) angeboten.

In der US 4,968,251 wird ein Vakuum-Tiefziehverfahren zur Herstellung Bleichschienen oder dgl. beschrieben. Hierzu wird eine Folie oder Platte auf eine Temperatur erwärmt, bei welcher sie plastisch verformbar ist. In diesem Zustand wird die Folie oder Platte auf ein Gipsmodell aufgelegt und von einer luftundurchlässigen Folie durch Anlegen eines Vakuums auf das Gipsmodell aufgezogen, so dass eine Schiene erstellt wird. Gleichzeitig kann mit diesem Verfahren auch eine schwammartige Schicht auf der den Zähnen zugewandten Seite in die Schiene eingebracht werden. Nach dem Abkühlen der Schiene kann diese bzw. die schwammartige Schicht mit Wirkstoffen befüllt und in den Patientenmund eingesetzt werden. Eine für ein derartiges Tiefziehverfahren geeignete Vorrichtung ist in der DE 195 11 064 C2 der Erkodent Erich Kopp GmbH offenbart. Auch bei diesem Verfahren muss zunächst ein Kieferabdruck abgeformt und von diesem ein Gipsmodell erstellt werden, was zeit- und kostenintensiv ist. Aufgabe der vorliegenden Erfindung ist es demgegenüber ein Verfahren und einen Abdrucklöffel zur Herstellung einer Dentalschiene bereit zu stellen, um mit möglichst geringem Aufwand eine Dentalschiene mit hoher Passgenauigkeit bereit zu stellen.

Diese Aufgabe wird erfindungsgemäß mit einem Verfahren gelöst, welches die folgenden Schritte umfasst: Erwärmen einer thermoplastischen Folie auf eine Temperatur, die unterhalb von etwa 80° C und oberhalb der Erweichungstemperatur der thermoplastischen Folie liegt, Applizieren der thermoplastischen Folie mit einem mit einem knetbaren Material, welches bei Temperaturen zwischen 20° C und 80° C, insbesondere zwischen 30° C und 60° C plastisch verformbar ist, beschickten Abdrucklöffel in einem Patientenmund, Anlegen der thermoplastischen Folie an wenigstens einen Zahn unter Ausbildung einer Dentalschiene für eine Zeitspanne, bis die thermoplastische Folie auf eine Temperatur unterhalb ihrer Erweichungstemperatur abgekühlt ist, und Entnehmen des Abdrucklöffels, des knetbaren Materials und der aus der thermoplastischen Folie gebildeten Dentalschiene aus dem Patientenmund. Mit dem erfindungsgemäßen Verfahren kann folglich eine Dentalschiene intraoral hergestellt werden, ohne dass hierzu ein Gipsmodell erstellt werden muss. Gleichzeitig wird durch das Verfahren gemäß der vorliegenden Erfindung eine Schiene mit hoher Präzision erstellt, die z.B. als Bissschablone, Miniplastschiene, Knirscherschiene, Verbandplatte, Aufbissschiene, Bissführungsschiene, Mundschutz, Fluoridierungsschiene, Bleachingschiene, Übertragungsschiene und/oder Positioner einsetzbar ist. Durch das Applizieren der thermoplastischen Folie mit dem knetbaren Material wird allseits ein gleichmäßiger Druck auf die thermoplastische Folie ausgeübt, so dass die während der Abkühlung und Aushärtung entstehende Dentalschiene eine gleichmäßige Schichtdicke und Konturenpassung aufweist. Der Druck auf die thermoplastische Folie wird dabei bereits durch den steifen Abdrucklöffel erzeugt, welcher mit dem knetbaren Material beschickt ist, das wiederum die thermoplastische Folie an die Zähne anlegt. Alternativ oder zusätzlich hierzu kann das knetbare Material auch manuell gegen die thermoplastische Folie gedrückt werden, die sich so eng an die Zähne anschmiegt. Das knetbare Material kann bspw. ein nicht aushärtendes, thermoplastisches Material, wie Plastilin, Silikon-Compound, Mineralöl-Compound oder dgl., oder ein chemisch aushärtendes Material sein, wie bspw. ein herkömmliches Zweikomponenten-Abformmaterial.

Vorzugsweise werden der Abdrucklöffel, das knetbare Material und die thermoplastische Folie vor dem Applizieren in den Patientenmund gemeinsam auf eine Temperatur, die oberhalb der Erweichungstemperatur der plastischen Folie und unterhalb der Erweichungstemperatur des Abdrucklöffels liegt, erwärmt. Der Abdrucklöffel kann folglich als Set vorbeschickt mit dem knetbaren Material und der thermoplastischen Folie bereitgestellt werden, so dass nach dem Erwärmen des befüllten Abdrucklöffels direkt die Schiene erstellt werden kann.

Nach einer weiteren Ausführungsform des erfindungsgemäßen Verfahrens können auch nur die Folie und das knetbare Material vorkonfektioniert vorliegen, um dann - vor oder nach dem Erwärmen - gemeinsam in einen herkömmlichen Abdrucklöffel eingebracht zu werden.

Alternativ hierzu ist es auch möglich, nur die thermoplastische Folie oder die thermoplastische Folie getrennt von dem Abdrucklöffel und/oder dem knetbaren Material vor dem Applizieren zu erwärmen. Sowohl die für die ausreichende Erwärmung als auch für die Abkühlung während der Ausbildung der Dentalschiene erforderliche Zeit kann auf diese Weise verkürzt werden.

Vorzugsweise wird die thermoplastische Folie auf eine Temperatur zwischen etwa 40° C und 80° C erwärmt. Eine für Patienten angenehmere Verarbeitungstemperatur liegt zwischen 40° C und 70° C, insbesondere zwischen etwa 40° C und etwa 60° C.

Nachdem die aus der thermoplastischen Folie gebildete Dentalschiene abgekühlt ist, kann diese gemeinsam mit dem Abdrucklöffel und dem knetbaren Material aus dem Patientenmund entnommen werden und anschließend von dem knetbaren Material abgelöst werden. Es ist jedoch auch möglich, dass die aus der thermoplastischen Folie gebildete Schiene bei der Entnahme des Abdrucklöffels und des knetbaren Materials zunächst in dem Patientenmund verbleibt und erst danach separat von dem Abdrucklöffel und dem knetbaren Material aus diesem entnommen wird.

Um die Passgenauigkeit und/oder den Tragekomfort der derart erstellten Dentalschiene zu erhöhen, kann diese nach der Entnahme aus dem Patientenmund beschnitten oder nachgearbeitet werden.

Ein erfindungsgemäßer Abdrucklöffel, der zur Herstellung einer Dentalschiene geeignet ist, besteht aus einem bei Temperaturen unter 80° C, insbesondere auch bei Temperaturen unter 140° C festen Material und ist mit einem zumindest bei Temperaturen zwischen 20° C und 80° C, vorzugsweise zwischen 30° C und 60° C plastisch verformbaren Material beschickt. Auf diesem plastisch verformbaren Material ist dabei eine zu einer Dentalschiene formbare thermoplastische Folie mit einer Schichtdicke zwischen 0,1 mm und etwa 4 mm angeordnet, deren Erweichungstemperatur zwischen etwa 40° C und 80° C liegt. Vorzugsweise beträgt die Schichtdicke der thermoplastisch verformbaren Folie zwischen 0,5 mm und 3 mm, insbesondere etwa zwischen 0,5 mm und 2 mm. Die für das erfindungsgemäße Verfahren und den erfindungsgemäßen Abdrucklöffel besonders geeigneten Folien haben bspw. eine Dicke von 0,5 mm, 0,8 mm, 1,0 mm oder 1,5 mm.

Nach einer bevorzugten Ausführungsform der Erfindung besteht die thermoplastische Folie bspw. aus Copolymer von Ethyl- und Vinylacetat, Polycaprolacton, Polypropylen, Polyethylen oder einem Formgedächtniskunststoff. Derartige Materialien sind bspw. von Dupont, Solvay, Atofina bzw. mnemoScience erhältlich.

Erfindungsgemäß ist es vorgesehen, dass die thermoplastische Folie plattenförmig flach bzw. hufeisenförmig flach vorgesehen und auf dem knetbaren, plastisch verformbaren Material angeordnet ist. Alternativ hierzu ist es auch möglich, dass die thermoplastische Folie derart auf dem plastisch verformbaren Material angeordnet ist, dass sie einen U-förmigen Querschnitt aufweist. Dabei kann die thermoplastische Folie ebenfalls hufeisenförmig geformt sein.

Der erfindungsgemäß vorgesehene Abdrucklöffel ist vorzugsweise mit dem plastisch verformbaren Material und der thermoplastischen Folie zu einem dreischichtigen Set vorkonfektioniert, so dass der Abdrucklöffel nach dem Erwärmen direkt appliziert werden kann. Es ist jedoch auch möglich, dass alle oder einige der Bestandteile des Abdrucklöffels getrennt voneinander vorliegen, um bspw. die thermoplastische Folie separat zu erwärmen.

Die Erfindung wird nachfolgend anhand von Ausführungsbeispielen und unter Bezugnahme auf die Zeichnung näher erläutert.

Es zeigen schematisch:
- Fig. 1: eine perspektivische Ansicht eines unbefüllten Abdrucklöffels,
- Fig. 2: im Querschnitt einen befüllten Abdrucklöffel nach einer ersten Aus- führungsform der Erfindung,
- Fig. 3: im Querschnitt einen befüllten Abdrucklöffel nach einer weiteren Ausführungsform der Erfindung und
- Fig. 4: eine Draufsicht auf eine Dentalschiene.

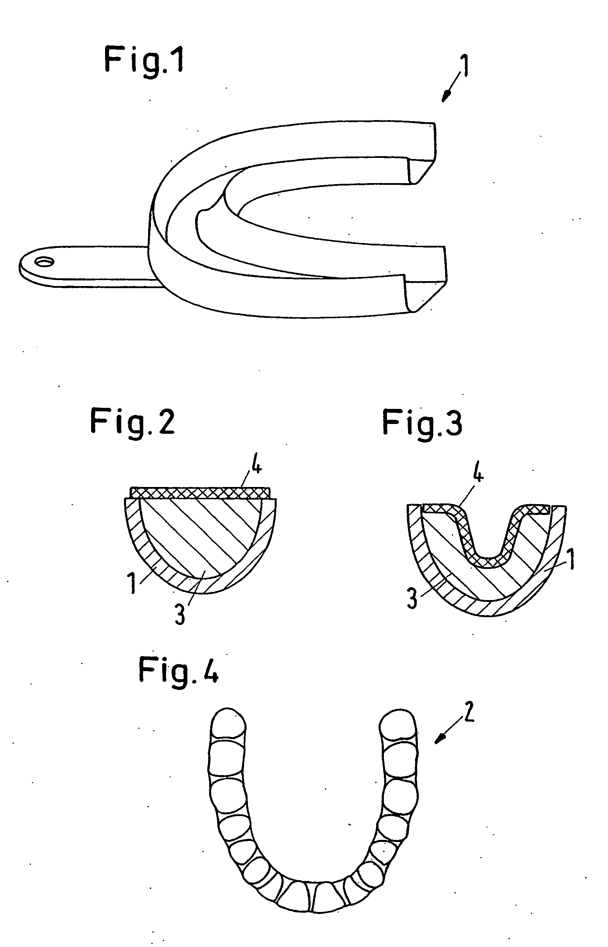

In den Fig. 1 bis 3 ist ein Abdrucklöffel 1 dargestellt, der bspw. einem herkömmlichen Abdrucklöffel zur Herstellung einer Gebissabformung entspricht, aus welcher ein Gipsmodell erstellbar ist. Der Abdrucklöffel 1 kann aus Metall oder Kunststoff bestehen und ist zumindest bei Temperaturen unterhalb von 80° C steif und im Wesentlichen nicht manuell verformbar. Wenn der Abdrucklöffel 1 auch bei Temperaturen unterhalb von 140° C steif ist, kann er in einem Autoklav sterilisiert werden. Der Abdrucklöffel 1 ist hufeisenförmig den Konturen eines Gebisses nachempfunden und weist einen in der gezeigten Ausführungsform U-förmigen Querschnitt auf.

Zur Herstellung einer in Fig. 4 gezeigten Dentalschiene 2 wird der Abdrucklöffel 1, wie in den Fig. 2 und 3 dargestellt, mit einem knetbaren, plastisch verformbaren Material 3 befüllt. Weiter wird auf bzw. in das knetbare Material 3 eine thermoplastische Folie 4 aufgelegt. Die thermoplastische Folie 4 hat dabei eine Schichtdicke zwischen 0,1 mm und etwa 4 mm, bspw. etwa 0,5 mm bis 2 mm. Bei Körpertemperatur und bei Raumtemperatur ist die thermoplastische Folie 4, die bspw. aus Copolymer von Ethyl- und Vinylacetat, Polycaprolacton, Polypropylen, Polyethylen oder einem Formgedächtniskunststoff bestehen kann, fest. Erst bei Temperaturen, die oberhalb der Körpertemperatur liegen, d.h. zwischen 40° C und 80° C wird die thermoplastische Folie 4 manuell plastisch verformbar. Das knetbare Material 3 erfährt bei diesen Temperaturen keine oder nur geringfügige Viskositätsänderungen oder kann im Ausgangszustand bei Raumtemperatur eine zähere Konsistenz haben und erst bei den darüber liegenden Verarbeitungstemperaturen eine knetbare Konsistenz erhalten.

Die thermoplastische Folie 4 ist nach der in Fig. 2 dargestellten Ausführungsform näherungsweise als eine flache Platte ausgebildet, die über den Abdrucklöffel 1 überstehen kann oder im Wesentlichen an die Kontur des Abdrucklöffels 1 angepasst, hufeisenförmig zugeschnitten sein kann. Alternativ hierzu ist es auch möglich, dass die thermoplastische Folie 4 derart auf das knetbare Material 3 und in den Abdrucklöffel 1 eingelegt wird, dass sie, wie in Fig. 3 gezeigt, im Querschnitt näherungsweise U-förmig gestaltet ist.

Die thermoplastische Folie 4 wird zur Herstellung einer Dentalschiene 2 auf eine Verarbeitungstemperatur erwärmt, die bspw. zwischen 40° C und 60° C liegen kann. Dabei kann entweder der Abdrucklöffel 1 gemeinsam mit dem knetbaren Material 3 und der thermoplastischen Folie 4 in einem Wasserbad oder dgl. aufgewärmt werden. Alternativ hierzu kann die thermoplastische Folie 4 auch getrennt von dem Abdrucklöffel 1 und/oder dem knetbaren Material 3 auf Verarbeitungstemperatur gebracht und erst danach auf den Abdrucklöffel und das knetbare Material aufgelegt werden.

Um eine Dentalschiene 2 herzustellen, wird die thermoplastische Folie 4 direkt in dem Mund eines Patienten appliziert. Hierzu wird die thermoplastische Folie 4 separat oder gemeinsam mit dem Abdrucklöffel 1 und dem knetbaren Material 3 auf eine Zahnreihe oder einzelne Zähne angelegt. Wenn der steife und mit knetbarem Material befüllte Abdrucklöffel 1 gegen die Zahnreihe gepresst wird, verformt sich die thermoplastische Folie 4 entsprechend der Konturen der Zähne, wobei das knetbare Material 3 allseits einen gleichmäßigen Druck auf die thermoplastische Folie 4 ausübt. Die thermoplastische Folie 4 erfährt dadurch keine oder nur sehr geringe Änderungen ihrer Schichtdicke und schmiegt sich dicht an die Zähne an. Auf diese Weise wird aus der plastisch verformbaren Folie 4 eine Dentalschiene 2 gebildet, die nach dem Erkalten auf Körpertemperatur verfestigt.

Der Abdrucklöffel 1 kann dann gemeinsam mit dem knetbaren Material 3 und der Dentalschiene 2 aus dem Mund entnommen werden. Die Materialien des knetbaren Materials 3 und der Schiene 2 sind dabei so gewählt, dass sie sich bei der Verarbeitungstemperatur nicht miteinander verbinden und leicht voneinander entfernt werden können. Alternativ hierzu kann zunächst der Abdrucklöffel 1 mit dem knetbaren Material 3 aus dem Mund entnommen werden, während die Dentalschiene 2 im Mund verbleibt und separat entnommen wird.

Nach einem ggf. erforderlichen Beschneiden oder sonstiger Nachbearbeitung kann die direkt im Patientenmund erstellte Dentalschiene 2 als Bissschablone, Miniplastschiene, Knirscherschiene, Verbandplatte, Aufbissschiene, Bissführungsschiene, Mundschutz, Fluoridierungsschiene, Bleachingschiene, Übertragungsschiene, Positioner oder dgl. eingesetzt werden.

## Patentansprüche

1. Verfahren zur Herstellung einer Dentalschiene, umfassend die folgenden Schritte:
Erwärmen einer thermoplastischen Folie (4) auf eine Temperatur, die unterhalb von 80° C und oberhalb der Erweichungstemperatur der thermoplastischen Folie (4) liegt,
Applizieren der thermoplastischen Folie (4) mit einem mit einem knetbaren Material (3) beschickten Abdrucklöffel (1) in einem Patientenmund,
Anlegen der thermoplastischen Folie (4) an wenigstens einen Zahn unter Ausbildung einer Dentalschiene (2) für eine Zeitspanne, bis die thermoplastische Folie (4) auf eine Temperatur unterhalb ihrer Erweichungstemperatur abgekühlt ist, und
Entnehmen des Abdrucklöffels (1), des knetbaren Materials (3) und der aus der thermoplastischen Folie (4) gebildeten Dentalschiene (2) aus dem Patientenmund.

2. Verfahren nach Anspruch 1, **dadurch gekennzeichnet, dass** der Abdrucklöffel (1), das knetbare Material (3) und die thermoplastische Folie (4) vor dem Applizieren in den Patientenmund gemeinsam auf eine Temperatur, die oberhalb der Erweichungstemperatur der thermoplastischen Folie (4) und unterhalb der Erweichungstemperatur eines Abdrucklöffels (1) liegt, erwärmt werden.

3. Verfahren nach Anspruch 2, **dadurch gekennzeichnet, dass** der Abdrucklöffel (1) vor dem Erwärmen mit dem knetbaren Material (3) und der thermoplastischen Folie (4) beschickt wurde.

4. Verfahren nach einem der Ansprüche 1 bis 3, **dadurch gekennzeichnet, dass** die thermoplastische Folie (4) und das knetbare Material (3) vorkonfektioniert gemeinsam vor oder nach dem Erwärmen in den Abdrucklöffel (1) eingebracht werden.

5. Verfahren nach Anspruch 1, **dadurch gekennzeichnet, dass** nur die thermoplastische Folie (4) oder die thermoplastische Folie (4) getrennt von dem Abdrucklöffel (1) und/oder dem knetbaren Material (3) vor dem Applizieren erwärmt wird.

6. Verfahren nach einem der vorhergehenden Ansprüche, **dadurch gekennzeichnet, dass** die thermoplastische Folie (4) auf eine Temperatur zwischen 40° C und 60° C erwärmt wird.

7. Verfahren nach einem der vorhergehenden Ansprüche, **dadurch gekennzeichnet, dass** die aus der thermoplastischen Folie (4) gebildete Dentalschiene (2) gemeinsam mit dem Abdrucklöffel (1) und dem knetbaren Material (3) aus dem Patientenmund entnommen wird und danach von dem knetbaren Material (3) abgelöst wird.

8. Verfahren nach einem der Ansprüche 1 bis 7, **dadurch gekennzeichnet, dass** die aus der thermoplastischen Folie (4) gebildete Dentalschiene (2) bei der Entnahme des Abdrucklöffels (1) und des knetbaren Materials (3) in dem Patientenmund verbleibt und erst danach aus diesem entnommen wird.

9. Verfahren nach einem der vorhergehenden Ansprüche, **dadurch gekennzeichnet, dass** die thermoplastische Folie (4) zur Ausbildung der Dentalschiene (2) durch das knetbare Material (3) an wenigstens einen Zahn angepresst wird.

10. Verfahren nach einem der vorhergehenden Ansprüche, **dadurch gekennzeichnet, dass** die Dentalschiene (2) nach der Entnahme aus dem Patientenmund beschnitten und/oder nachbearbeitet wird.

11. Abdrucklöffel zur Herstellung einer Dentalschiene, der aus einem bei Temperaturen unter 140° C festen Material besteht und der mit einem zumindest bei Temperaturen zwischen 40° C und 80° C plastisch verformbaren Material (3) beschickt ist, **dadurch gekennzeichnet, dass** auf dem plastisch verformbaren Material (3) eine zu einer Dentalschiene (2) formbare thermoplastische Folie (4) mit einer Schichtdicke zwischen 0,1 mm und etwa 4 mm angeordnet ist, deren Erweichungstemperatur zwischen 40° C und 80° C liegt.

12. Abdrucklöffel nach Anspruch 11, **dadurch gekennzeichnet, dass** die Folie (4) eine Schichtdicke von etwa 0,5 mm bis etwa 2 mm aufweist.

13. Abdrucklöffel nach einem der Ansprüche 11 oder 12, **dadurch gekennzeichnet, dass** die thermoplastische Folie (4) aus Copolymer von Ethyl- und Vinylacetat, Polycaprolacton, Polypropylen, Polyethylen oder einem Formgedächtniskunststoff besteht.

14. Abdrucklöffel nach einem der Ansprüche 11 bis 13, **dadurch gekennzeichnet, dass** die thermoplastische Folie (4) als eine flache Platte oder flach hufeisenförmig auf dem plastisch verformbaren Material (3) angeordnet ist.

15. Abdrucklöffel nach einem der Ansprüche 11 bis 13, **dadurch gekennzeichnet, dass** die thermoplastische Folie (4) einen U-förmigen Querschnitt aufweist und plattenförmig oder hufeisenförmig auf dem plastisch verformbaren Material (3) angeordnet ist.

## Claims

1. A method of producing a dental mould comprising the following stages:
warming of a thermoplastic film (4) to a temperature which is below 80°C and above the softening temperature of the thermoplastic film (4),
application of the thermoplastic film (4) into the patient's mouth with an impression tray (1) provided with a kneadable material (3),
application of the thermoplastic film (4) to at least one tooth forming a dental mould (2) for a period of time until the thermoplastic film (4) has cooled to a temperature below its softening temperature, and
removal of the impression tray (1), the kneadable material (2) and the dental mould (2) formed by the thermoplastic film (4) from the patient's mouth.

2. The method in accordance with claim 1 **characterised in that** before application into the patient's mouth, the impression tray (1), the kneadable material (3) and thermoplastic film (4) are jointly warmed to a temperature above the softening temperature of the thermoplastic film (4) and below the softening temperature of the impression tray (1).

3. The method in accordance with claim 2, **characterised in that** before being warmed the impression tray (1) is provided with the kneadable material (3) and the thermoplastic film (4).

4. The method in accordance with any one of claims 1 to 3, **characterised in that** the thermoplastic film (4) and the kneadable material (3) are jointly introduced in a prefabricated state into the impression tray (1) before or after warming.

5. The method in accordance with claim 1 **characterised in that** only the thermoplastic film (4) or the thermoplastic film (4) separately from the impression tray (1) and/or the kneadable material (3) is warmed before application.

6. The method in accordance with any one of the preceding claims **characterised in that** the thermoplastic film (4) is warmed to a temperature of between 40°C and 60°C.

7. The method in accordance with any one of the preceding claims **characterised in that** the dental mould (2) formed from the thermoplastic film (4) is removed from the patient's mouth together with the impression tray (1) and the kneadable material (3) and then separated from the kneadable material (3).

8. The method in accordance with any one of claims 1 to 7 **characterised in that** the dental mould (2) formed from the thermoplastic film (4) remains in the patient's mouth after removal of the impression tray (1) and the kneadable material (3) and is only then removed from the patient's mouth.

9. The method in accordance with any one of the preceding claims **characterised in that** the thermoplastic film (4) for forming the dental mould (2) is pressed against at least one tooth by the kneadable material (3).

10. The method in accordance with any one of the preceding
claims **characterised in that** after removal from the patient's mouth the dental mould (2) is cut and/or subsequently processed.

11. An impression tray for producing a dental mould consisting of material which is solid at temperatures below 140°C and is provided with a material which is plastically deformable at least at temperatures between 40°C and 80°C, **characterised in that** arranged on the plastically deformable material (3) is a thermoplastic film (4), formable into a dental mould (2), with a layer thickness of between 0.1 mm and around 4 mm, the softening temperature of which lies between 40°C and 80°C.

12. The impression tray in accordance with claim 11 **characterised in that** the film (4) has a layer thickness of around 0.5 mm to around 2 mm.

13. The impression tray in accordance with any one of claims 11 or 12 **characterised in that** the thermoplastic film (4) consists of a copolymer of ethyl and vinyl acetate, poly-caprolactone, polypropylene, polyethylene or a shape memory synthetic material.

14. The impression tray in accordance with any one of claims 11 to 13 **characterised in that** the thermoplastic film (4) is arranged as a flat plate or as a flat horseshoe shape on the plastically deformable material (3).

15. The impression tray in accordance with any one of claims 11 to 13 **characterised in that** the thermoplastic film (4) has a U-shaped cross-section and arranged in the form of a plate of horseshoe shape on the plastically deformable material (3).

## Revendications

1. Procédé de fabrication d'un rail dentaire, comprenant les étapes suivantes :
réchauffement d'un film thermoplastique (4) à une température située en dessous de 80° C et au dessus de la température de ramollissement du film thermoplastique (4),
application du film thermoplastique (4) à l'aide d'une cuillère à empreintes (1) chargée de matériau modelable (3) dans la bouche d'un patient,
pose du film thermoplastique (4) sur au moins une dent en formant un rail dentaire (2) pendant un laps de temps jusqu'à ce que le film thermoplastique (4) soit refroidi à une température inférieure à sa température de ramollissement et
retrait de la cuillère à empreintes (1), du matériau modelable (3) et du rail dentaire (2) formé du film thermoplastique (4) de la bouche du patient.

2. Procédé selon la revendication 1, **caractérisé en ce que** la cuillère à empreintes (1), le matériau modelable (3) et le film thermoplastique (4) sont chauffés ensemble avant application dans la bouche du patient à une température située au dessus de la température de ramollissement du film thermoplastique (4) et en dessous de la température de ramollissement d'une cuillère à empreintes (1).

3. Procédé selon la revendication 2, **caractérisé en ce que** la cuillère à empreintes (1) a été chargée avant son réchauffement avec le matériau modelable (3) et le film thermoplastique (4).

4. Procédé selon une des revendications 1 à 3, **caractérisé en ce que** le film thermoplastique (4) et le matériau modelable (3) sont introduits ensemble dans la cuillère à empreintes (1) une fois préconfectionnés avant ou après réchauffement.

5. Procédé selon la revendication 1, **caractérisé en ce que** seulement le film thermoplastique (4) ou le film thermoplastique (4) séparément de la cuillère à empreintes (1) et/ou du matériau modelable (3) est chauffé avant application.

6. Procédé selon une des revendications précédentes, **caractérisé en ce que** le film thermoplastique (4) est chauffé à une température comprise entre 40° C et 60° C.

7. Procédé selon une des revendications précédentes, **caractérisé en ce que** le rail dentaire (2) formé du film thermoplastique (4) est retiré en même temps que la cuillère à empreintes (1) et que le matériau modelable (3) de la bouche du patient et est ensuite détaché du matériau modelable (3).

8. Procédé selon une des revendications 1 à 7, **caractérisé en ce que** le rail dentaire (2) formé du film thermoplastique (4) reste dans la bouche du patient lors du retrait de la cuillère à empreintes (1) et du matériau modelable (3) et n'est retiré qu'ensuite de celle-ci.

9. Procédé selon une des revendications précédentes, **caractérisé en ce que** le film thermoplastique (4) est comprimé contre au moins une dent pour constituer le rail dentaire (2) par le matériau modelable (3).

10. Procédé selon une des revendications précédentes, **caractérisé en ce que** le rail dentaire (2) est découpé et/ou retravaillé après retrait de la bouche du patient.

11. Cuillère à empreintes pour la fabrication d'un rail dentaire, qui est composée d'un matériau solide à des températures inférieures à 140° et qui est chargée d'un matériau (3) déformable plastiquement à des températures comprises entre 40° C et 80° C, **caractérisée en ce qu'**est disposé sur le matériau (3) déformable plastiquement un film thermoplastique (4) façonnable en un rail dentaire (2) et ayant une épaisseur de couche comprise entre 0,1 mm et environ 4 mm dont la température de ramollissement est comprise entre 40° C et 80° C.

12. Cuillère à empreintes selon la revendication 11, **caractérisée en ce que** le film (4) présente une épaisseur de film d'environ 0,5 mm à environ 2 mm.

13. Cuillère à empreintes selon une des revendications 11 ou 12, **caractérisée en ce que** le film thermoplastique (4) est composé de copolymère d'éthyle et vinyle acétate, polycaprolactone, polypropylène, polyéthylène ou d'une matière plastique à mémoire de forme.

14. Cuillère à empreintes selon une des revendications 11 à 13, **caractérisée en ce que** le film thermoplastique (4) est disposé sous forme d'une plaque plate ou en forme de fer à cheval plat sur le matériau (3) déformable plastiquement.

15. Cuillère à empreintes selon une des revendications 11 à 13, **caractérisée en ce que** le film thermoplastique (4) présente une section transversale en forme de U et est disposé sous forme de plaque ou en forme de fer à cheval plat sur le matériau (3) déformable plastiquement.
